(19) Europäisches Patentamt

European Patent Office

Office européen des brevets

(11) EP 0 954 144 B1

(12) EUROPEAN PATENT SPECIFICATION

(45) Date of publication and mention
of the grant of the patent:
28.06.2006 Bulletin 2006/26

(51) Int Cl.:
H04L 25/02 (2006.01)

(21) Application number: 99303283.8

(22) Date of filing: 27.04.1999

(54) Channel estimation using soft-decision feedback

Kanalschätzung unter Verwendung von Weichentscheidungsrückkoppelung

Estimation du canal utilisant des décisions récursives douces

(84) Designated Contracting States:
DE ES FI FR GB IT SE

(30) Priority: 30.04.1998 EP 98303417

(43) Date of publication of application:
03.11.1999 Bulletin 1999/44

(73) Proprietor: LUCENT TECHNOLOGIES INC.
Murray Hill, New Jersey 07974-0636 (US)

(72) Inventors:
• Luschi, Carlo
Oxford OX2 OQT (GB)
• Sandell, Magnus
Swindon,
Wiltshire SN1 3PN (GB)
• Mujtaba, Syed Aon
Berkeley Heights,
New Jersey 07922 (US)
• Strauch, Paul Edward
Swindon,
Wliltshire (GB)
• ten Brink, Stephan, Dipl.-Ing.
71573 Baden-Wurttemberg (DE)
• Yan, Ran-Hong
Marlborough,
Wiltshire SN8 1XB (GB)

(74) Representative: Williams, David John et al
Lucent Technologies UK Limited,
5 Mornington Road
Woodford Green,
Essex IG8 0TU (GB)

(56) References cited:
• VALLET R: "SYMBOL BY SYMBOL MAP DETECTION AND THE BAUM-WELCH IDENTIFICATION ALGORITHM IN DIGITAL COMMUNICATIONS" SIGNAL PROCESSING THEORIES AND APPLICATIONS, BRUSSELS, AUG. 24 - 27, 1992, vol. 3, no. CONF. 6, 24 August 1992 (1992-08-24), pages 131-134, XP000348631 Amsterdam
• CASTELLINI G ET AL: "A CONTINUOUSLY ADAPTIVE MLSE RECEIVER FOR MOBILE COMMUNICATIONS: ALGORITHM AND PERFORMANCE" IEEE TRANSACTIONS ON COMMUNICATIONS, vol. 45, no. 1, January 1997 (1997-01), pages 80-88, XP000642238 New York, USA
• PERREAU S ET AL: "AN EQUALIZER INCLUDING A SOFT CHANNEL DECODER" IEEE SIGNAL PROCESSING WORKSHOP ON SIGNAL PROCESSING ADVANCES IN WIRELESS COMMUNICATIONS,16 April 1997 (1997-04-16), pages 9-12, XP002063867 New York, USA
• CLARK A P ET AL: "Data transmission at 19.2 kbit/s over telephone circuits" RADIO AND ELECTRONIC ENGINEER, APRIL 1983, UK, vol. 53, no. 4, pages 157-166, XP002078024 ISSN 0033-7722
• AVNI MORGUL ET AL: "DECISION DIRECTED CHANNEL PARAMETER ESTIMATION AND TRACKING USING ERRONEOUS DETECTORS" SIGNAL PROCESSING EUROPEAN JOURNAL DEVOTED TO THE METHODS AND APPLICATIONS OF SIGNAL PROCESSING, vol. 25, no. 3, 1 December 1991 (1991-12-01), pages 307-318, XP000273740 Amsterdam

- WU L ET AL: "A NEW SHORT-BLOCK DIGITAL TRANSMISSION SCHEME WITH ADAPTIVE MLSE FOR MOBILE RADIO CHANNELS" PROCEEDINGS OF THE VEHICULAR TECHNOLOGY CONFERENCE, STOCKHOLM, JUNE 8 - 10, 1994, vol. 1, no. CONF. 44, 8 June 1994 (1994-06-08), pages 243-247, XP000496671 INSTITUTE OF ELECTRICAL AND ELECTRONICS ENGINEERS
- TURIN G L: "Introduction to spread-spectrum antimultipath techniques and their application to urban digital radio" PROCEEDINGS OF THE IEEE, MARCH 1980, vol. 68, no. 3, pages 328-353, XP002078025 ISSN 0018-9219, New York, USA
- HAGENAUER J: "SOURCE-CONTROLLED CHANNEL DECODING" IEEE TRANSACTIONS ON COMMUNICATIONS, vol. 43, no. 9, September 1995 (1995-09), pages 2449-2457, XP000525669

**Description**

This invention relates to channel estimation methods and apparatus in mobile radio communications which adaptively compensate for channel distortion on a block-by-block basis.

In digital mobile radio communications, transmission channels suffer from severe distortion due to frequency selective fading. In addition, channel characteristics are normally time-varying due to the relative motion of fixed and mobile stations. Inter-symbol interference (ISI) is one of the primary impediments to reliable estimates of the transmitted data. In order to allow for reliable transmission, the receiver must be able to estimate and compensate for channel distortion on a block-by-block basis. Equalisation schemes usually employed in modem mobile communications rely on an estimate of the channel, generated from a known training sequence, inserted into the transmitted signal block. Equalisation may be improved by means of decision feedback, as described in K.H. Chang and C.N. Georghiades in "Iterative Join Sequence and Channel Estimation for Fast Time-Varying Inter-symbol Interference", Proc. Intern. Conf. Commun. Pp.357-361, June 1995 [reference 1}.

There is thus a requirement for an equalizer with improved performance and which reduces the effects of error propagation.

According to a first aspect of the invention there is provided a method of estimating channel impulse response according to claim 1.

In hard decision feedback the decisions are assumed to be correct and are used in addition to a trasining sequence but erroneous decisions cause error propagations. With soft decision feedback, however, the decisions are usually in the form of log likelihood ratios (LLR).

A detailed description of the invention, using by way of illustration a practical digital radio receiver, is described below with reference to the following figures in which:

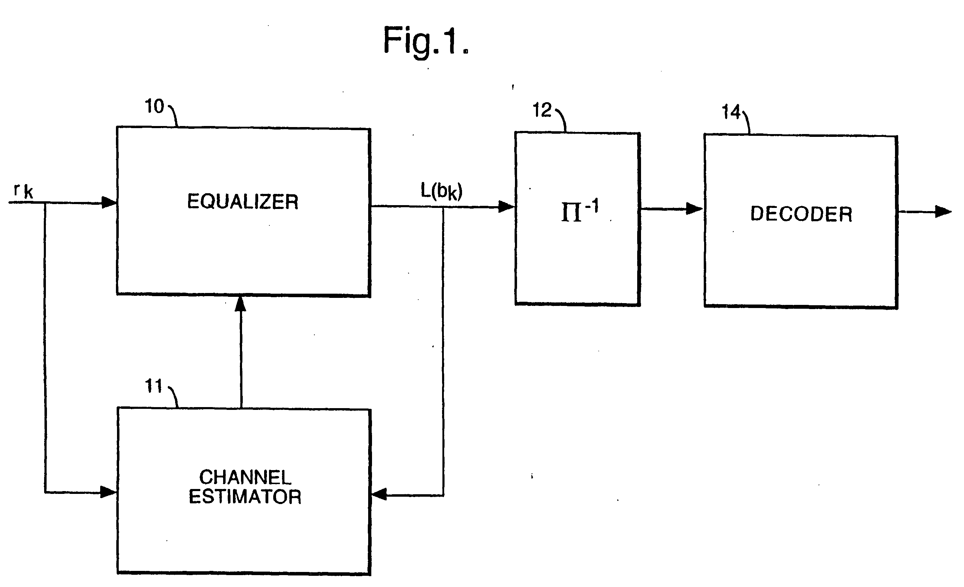

Figure 1 shows in outline an equalizer for a digital radio receiver.

The discrete-time received signal $r_k$ of figure 1 can be written as

$$r_k = \sum_{l=0}^{L-1} b_{k-l}\, h_l + n_k \tag{1}$$

where $b_k \in \{-1,1\}$ are the transmitted data symbols or known training sequence symbols, the $L$ complex tap-gains $h_l$ represent the samples of the equivalent channel impulse response, and $n_k$ indicates additive white Gaussian noise with zero mean and variance $\sigma^2$. Channel equalisation is commonly performed by maximum likelihood (ML) or maximum *a posteriori* probability (MAP) data estimation. In both cases, the receiver must first estimate, in the channel estimator 11, the channel impulse response $h_l$, which is required in the data estimation process, carried out in the equalizer 10. The data output L ($b_k$) is then deinterleaved, as indicated by $\Pi^{-1}(12)$ in figure 1 and decoded ($I_4$) The initial channel estimation is usually obtained by means of correlative channel sounding. In this case, the samples of the CIR estimate are obtained by correlating the received signal $r_k$ with $N$=16 bits $b_k$ out of the 26 bits training sequence:

$$\hat{h}_l = \frac{1}{N} \sum_{i=0}^{N-1} b_i\, r_{l+i} + n_k, \quad l=0, \ldots, L-1 \tag{2}$$

Due to the good autocorrelation properties of the GSM training sequence, the correlative channel sounding technique corresponds to ML channel estimation.

Once the channel estimate is available, the estimation of the data symbol sequence is performed. If the channel cannot be considered approximately constant within one burst, the initial channel estimate can be updated during the burst by using the decisions at the equaliser output. The equaliser soft-output sequence is finally de-interleaved and decoded.

Maximum likelihood sequence estimation implemented by the Viterbi algorithm (VA) is the optimum sequence detector, such as described in G.D. Formey, Jnr., "Maximum Likelihood Sequence Estimation of Digital Sequences in the presence of Intersymbol Interference", IEEE Trans. Inform. Theory, vol. IT-18, pp 363-378, May 1972 [reference 2]. It is widely used in digital mobile receivers for processing both the ISI trellis (equalisation) and the channel code trellis (channel decoding). However, the channel decoder performance is improved by an equaliser which provides soft values at the decoder input. Furthermore, in some advanced schemes implementing iterative equalisation and decoding and/or source controlled channel decoding, such as described in J. Hagenauer, "Source Controlled Channel Decoding", IEEE Trans. On Commun, Vol 43, no 9, PP 2449-2457 Sept 1995 [reference 3], the channel decoder must be able to provide soft-outputs for the coded bits and for the information bits.

In terms of bit-error probability, the optimum algorithm for soft-in/soft-out equalisation and decoding is the symbol-by-symbol MAP algorithm. In fact, being an a posteriori probability (APP) calculator, it intrinsically provides soft output values.

In a hard decision (HD) feedback scheme all decisions are assumed to be correct and may be used as an additional training sequence. By using vector notation the received signal may be described as

$$\underbrace{\begin{pmatrix} r_{L-1} \\ \vdots \\ r_{N-1} \end{pmatrix}}_{\mathbf{r}} = \underbrace{\begin{pmatrix} b_{L-1} & b_{L-2} & \cdots & b_0 \\ b_L & b_{L-1} & \cdots & b_1 \\ \vdots & \vdots & \ddots & \vdots \\ b_{N-1} & b_{N-2} & \cdots & b_{N-L} \end{pmatrix}}_{\mathbf{B}} \underbrace{\begin{pmatrix} h_0 \\ \vdots \\ h_{L-1} \end{pmatrix}}_{\mathbf{h}} + \underbrace{\begin{pmatrix} n_{L-1} \\ \vdots \\ n_{N-1} \end{pmatrix}}_{\mathbf{n}}$$

where $\mathbf{r}$ is the received signal vector, $\mathbf{B}$ is the matrix with the transmitted bits, $\mathbf{h}$ denotes the channel vector, and $\mathbf{n}$ the channel noise. Since we assume binary signalling, the transmitted bits $b_k$ take on the values $\pm 1$. The matrix product $\mathbf{Bh}$ corresponds to the convolution between $b_k$ and $h_k$ (see equation (1)). Note that the above notation assumes the channel to be constant over the block of transmitted data.

The least square (LS) estimate of the channel is

$$\hat{\mathbf{h}}^{\text{HDLS}} = \left(\mathbf{B}^H \mathbf{B}\right)^{-1} \mathbf{B}^H \mathbf{r}$$

where $H$ denotes Hermitian transpose and the inverse is assumed to exist.

With soft decision (SD) feedback, the soft output of the equaliser is fed back to the channel estimator. The soft output is usually in the form of a log-likelihood ratio (LLR)

$$L(b_k | \mathbf{r}) = \log \frac{\Pr(b_k = +1 | \mathbf{r})}{\Pr(b_k = -1 | \mathbf{r})} \tag{3}$$

which may equivalently be written as a probability

$$\Pr(b_k | \mathbf{r}) = \frac{e^{\frac{1}{2}L(b_k | \mathbf{r})}}{e^{\frac{1}{2}L(b_k | \mathbf{r})} + e^{-\frac{1}{2}L(b_k | \mathbf{r})}}$$

This a posteriori probability from the equaliser can be used as a priori knowledge for the channel estimator. A possible, but by no means unique, cost function to minimise would be

$$E\left\{ \|\mathbf{r} - \mathbf{Bh}\|^2 | \mathbf{r} \right\} = E\left\{ \sum_{k=L-1}^{N-1} |r_k - h_k * b_k|^2 | \mathbf{r} \right\} \tag{4}$$

where the expectation is taken over the bits $b_k$ conditioned on the received sequence $\mathbf{r}$. This cost function represents the average (or expected) distance between the received signal and a reconstructed signal. To minimise the cost function (4) it is differentiated with respect to the channel

$$\frac{\delta}{\delta\hat{\mathbf{h}}}E\left\{\|\mathbf{r}-\mathbf{Bh}\|^2\,\big|\,\mathbf{r}\right\}=E\left\{\frac{\delta}{\delta\hat{\mathbf{h}}}(\mathbf{r}-\mathbf{Bh})^H(\mathbf{r}-\mathbf{Bh})\big|\mathbf{r}\right\}=0\Rightarrow$$

$$E\left\{-\mathbf{B}^H\mathbf{r}+\mathbf{B}^H\mathbf{Bh}\,\big|\,\mathbf{r}\right\}=0\Rightarrow\hat{\mathbf{h}}=\overline{(\mathbf{B}^H\mathbf{B})}^{-1}\overline{\mathbf{B}}^H\mathbf{r}$$

where $\overline{\mathbf{B}^H\mathbf{B}}=E\left\{\mathbf{B}^H\mathbf{B}\right\}$ and $\overline{\mathbf{B}}=E\{\mathbf{B}\}$. For soft decision

$$E\left\{b_k b_1\big|\mathbf{r}\right\}=\begin{cases}\overline{b}_k\overline{b}_1 & k\neq 1\\ 1 & k=1\end{cases}$$

where $b_k=E\{b_k r\}=2\mathbf{Pr}(b_k=+1|\mathbf{r})-1$. Note that this value is always in the range [-1,+1]. The expectation of $\mathbf{B}^H\mathbf{B}$(see page 3) now becomes:

$$\overline{\mathbf{B}^H\mathbf{B}}=\begin{bmatrix} N-L+1 & \overline{b}_{L-1}\overline{b}_L+\dots+\overline{b}_{N-2}\overline{b}_{N-1} & \cdots & \overline{b}_0\overline{b}_L+\dots+\overline{b}_{N-L-2}\overline{b}_{N-1} \\ \overline{b}_{L-1}\overline{b}_L+\dots+\overline{b}_{N-2}\overline{b}_{N-1} & N-L+1 & \cdots & \overline{b}_0\overline{b}_{L-1}+\dots+\overline{b}_{N-L-2}\overline{b}_{N-2} \\ \vdots & \vdots & \ddots & \vdots \\ \overline{b}_0\overline{b}_L+\dots+\overline{b}_{N-L-1}\overline{b}_{N-1} & \overline{b}_0\overline{b}_{L-1}+\dots+\overline{b}_{N-L-1}\overline{b}_{N-2} & \cdots & N-L+1 \end{bmatrix}$$

The off-diagonals of $\overline{\mathbf{B}^H\mathbf{B}}$ are small compared to the main diagonal terms. By ignoring them we have the simplification

$$\overline{\mathbf{B}^H\mathbf{B}}\approx(N-L+1)\mathbf{I} \tag{5}$$

and the simplified estimator (channel sounding) becomes

$$\hat{\mathbf{h}}^{HDCS}=\frac{1}{N-L+1}\overline{\mathbf{B}}^H\mathbf{r}$$

$$\hat{h}_m^{HDCS}=\frac{1}{N-L+1}\sum_{k=L-1}^{N-1}r_k\overline{b}_{k-m} \tag{6}$$

$$\overline{b}_{k-m}=E\left\{b_k\right\}=2\Pr\left(b_k=+1\big|\mathbf{r}\right)-1=\tanh\left(\frac{L\left(b_k\big|\mathbf{r}\right)}{2}\right)$$

Although the equaliser provides the log-likelihood ratios $L(b_k|\mathbf{r})$, these can easily be transformed by a lookup table to produce $\overline{b}_k$.

The above analysis also applies to the case where the channel estimator is obtained by feeding back the L-values of the coded bits provided by the channel decoder.

At low SNR the invention performs significantly better than hard decisions. From (6), where bits $b_k$ are uncertain (say, Pr $(b_k = +1|\mathbf{r}) = 0.6$) will produce a soft value (in this case $\overline{b}_k = 0.2$), whereas bits with a high reliability will give soft values close to $\pm 1$. This means that when a decision error occurs at the equalizer output, the probabilities Pr $(b_k = +1|\mathbf{r})$ often indicates a weak reliability which the channel estimator can use to reduce the effects of error propagation.

At higher SNR simulation show that least squares estimators perform significantly better than channel sounding, since least squares estimators can use the soft information to optimally weigh the feedback bits. At higher SNR, approximations (2) and (5) become significant, whereas with a low SNR this approximation error is concealed by the channel noise.

Simulations have also shown that the invention provides an improvement of about 0.8 dB with channel sounding and about 0.9 dB with a least squares estimation. Another advantage of the invention is that it does not require any matrix inversion.

## Claims

1.  A method of estimating channel impulse response using a signal transmitted over a channel in a communication system, said method comprising the step of:

    obtaining *a priori* knowledge about the transmitted signal, **characterised by** the step of
    using the transmitted signal and said a priori knowledge to choose an estimate of the channel impulse response which minimises the expected distance between the received signal and a reconstructed signal, where the expected distance is represented by a cost function E $\{\|r\text{-}Bh\|^2|r\}$, where r is the received signal vector, B is the matrix with the transmitted bits $b_k$, h denotes the channel vector, and Bh is the convolution of B and h, where an estimate of a transmitted bit $b_k$ is $\tanh\left\{\dfrac{L(b_k|\mathbf{r})}{2}\right\}$ where $L(b_k|\mathbf{r})$ is the log likelihood ratio representing the transmitted bit $b_k$.

2.  A method as claimed in claim 1, wherein the a priori knowledge is obtained from data estimation performed on the transmitted signal.

3.  A method as claimed in claim 1 wherein the *a priori* knowledge is obtained from a channel decoder.

4.  A method as claimed in claim 1 wherein the step of choosing the estimate uses channel sounding.

## Patentansprüche

1.  Verfahren zum Schätzen einer Kanalimpulsreaktion unter Verwendung eines Signals, das über einen Kanal in einem Kommunikationssystem übertragen wird, wobei das Verfahren folgende Schritte umfasst:

    Erhalten von A-priori-Wissen über das übertragene Signal, **gekennzeichnet durch** den Schritt des Verwendens des übertragenen Signals und des A-priori-Wissens, um eine Schätzung der Kanalimpulsreaktion auszuwählen, welche den erwarteten Abstand zwischen dem empfangenen Signal und einem rekonstruierten Signal minimiert, wobei der erwartete Abstand **durch** eine Kostenfunktion E$\{\|r\text{-}Bh\|^2|r\}$ dargestellt ist, wobei r der Vektor des empfangenen Signals ist, B die Matrix mit den übertragenen Bits $b_k$, h den Kanalvektor bezeichnet und Bh die Faltung von B und h ist, wobei eine Schätzung eines übertragenen Bits $b_k$ $\tanh\dfrac{L(b_k|\mathbf{r})}{2}$ ist, wobei $L(b_k|r)$ das Log-Likelihood-Ratio ist, welches das übertragene Bit $b_k$ darstellt.

2.  Verfahren nach Anspruch 1, wobei ein A-priori-Wissen aus einer Datenschätzung erhalten wird, die auf dem übertragenen Signal ausgeführt wird.

3.  Verfahren nach Anspruch 1, wobei das A-priori-Wissen aus einem Kanaldecodierer erhalten ist.

4.  Verfahren nach Anspruch 1, wobei der Schritt des Wählens der Schätzung unter Verwendung von Kanalsondierung erfolgt.

**Revendications**

1. Procédé d'estimation de réponse d'impulsion de canal utilisant un signal émis sur un canal dans un système de communication, ledit procédé comprenant l'étape d' :

   obtention d'une connaissance a priori au sujet du signal émis, **caractérisée par** l'étape d' utilisation du signal émis et de ladite connaissance a priori pour choisir une estimation de la réponse d'impulsion de canal qui minimise la distance prévue entre le signal reçu et un signal reconstruit, où la distance prévue est représentée par une fonction de coût $E\{\|r - Bh\|^2|r\}$, où r est le vecteur de signal reçu, B est la matrice avec les bits émis $b_k$, h désigne le vecteur de canal et Bh est la convolution de B et h, où une estimation d'un bit transmis $b_k$ est tanh $\dfrac{\{L(b_k|r)\}}{2}$ où $L(b_k|r)$ est le logarithme du rapport de probabilité représentant le bit émis $b_k$.

2. Procédé selon la revendication 1, dans lequel la connaissance a priori est obtenue à partir d'une estimation de données réalisée sur le signal émis.

3. Procédé selon la revendication 1 dans lequel la connaissance a priori est obtenue à partir d'un décodeur de canal.

4. Procédé selon la revendication 1 dans lequel l'étape de choix de l'estimation utilise un sondage de canal.

Fig.1.